# FASCICULE DE BREVET EUROPEEN

(11) **EP 0 733 977 B1**
(45) Date de publication et mention de la délivrance du brevet: **27.02.2002**
(21) Numéro de dépôt: 96400580.5
(22) Date de dépôt: 20.03.1996
(51) Int. Cl.: G06F 12/06

(54) **Système informatique avec mémoires hiérarchisées**
Rechnersystem mit hierarchischen Speichern
Computer system having hierarchical memories

(30) Priorité: 23.03.1995 FR 9503432
(43) Date de publication de la demande: 25.09.1996
(73) Titulaire: CSEM Centre Suisse d'Electronique et de Microtechnique, 2007 Neuchâtel (CH)
(72) Inventeur: Piguet, Christian, 75116 Paris (FR); Masgonty, Jean-Marc, 75116 Paris (FR)
(74) Mandataire: Ballot, Paul

(56) Documents cités:
- EP-A- 0 082 903
- US-A- 4 435 775
- PATENT ABSTRACTS OF JAPAN vol. 012, no. 492 (P-804), 22 Décembre 1988 & JP-A-63 201828 (HITACHI LTD), 19 Août 1988,
- PATENT ABSTRACTS OF JAPAN vol. 008, no. 089 (P-270), 24 Avril 1984 & JP-A-59 005355 (FUJITSU KK), 12 Janvier 1984,
- DIETRICH RHEIN/HEINZ FREITAG: "Mikroelektronische Speicher", 1992, SPRINGER-VERLAG, WIEN NEW YORK

## Description

L'invention concerne les systèmes informatiques comprenant au moins un microprocesseur associé à au moins une mémoire dans laquelle sont enregistrées des instructions d'un programme et/ou des données à traiter qui sont lues par le microprocesseur pour être utilisées par ce dernier conformément aux instructions du programme.

La taille des programmes d'instructions étant de plus en plus grande et le volume des données à traiter par un même programme étant également de plus en plus grand, les concepteurs de systèmes informatiques ont été conduits à utiliser des mémoires de plus en plus grandes. Or, les mémoires de grande taille ou capacité ont des temps d'accès plus longs que ceux des mémoires de plus faible capacité alors que, par ailleurs, les microprocesseurs ont des temps de calcul de plus en plus. faibles au fur et à mesure du développement des technologies de fabrication.

Pour répondre à cette inadéquation, il a été proposé diverses solutions et l'une d'entre elles consiste à utiliser en plus de la mémoire principale de petites mémoires rapides dites caches ou anté-mémoires pour enregistrer des instructions et/ou des données ainsi que les codes d'adresses de ces instructions et/ou données dans la mémoire principale. Quand le microprocesseur envoie une adresse de sélection de la mémoire principale, celle-ci est comparée aux adresses contenues dans la mémoire-cache et, si la comparaison est positive, l'instruction et/ou la donnée correspondante est lue dans cette mémoire-cache pour être transmise au microprocesseur en vue de son traitement. Si la comparaison est négative, le microprocesseur doit s'arrêter pour accéder à la mémoire principale en un certain nombre de cycles et aller chercher l'information recherchée par le microprocesseur. Cette information est enregistrée dans la mémoire-cache avec son adresse correspondante et le microprocesseur peut reprendre sa tâche et lire l'information recherchée dans la mémoire-cache. Ainsi, au cours d'une opération ultérieure du microprocesseur, si le même code d'adresse est transmis par le microprocesseur, l'information correspondante sera lue dans la mémoire-cache.

Le principe de base qui sous-tend l'utilisation d'une mémoire-cache est de modéliser l'avenir par le passé en supposant que les instructions ou données qui ont été utilisées dans le passé seront celles qui seront le plus souvent utilisées dans l'avenir. L'expérience montre que cette prédiction se révèle juste avec une très grande probabilité.

Tous les microprocesseurs modernes comportent des mémoires-caches. Les structures de ces mémoires-caches, dites associatives, car elles enregistrent non seulement les instructions et/ou données mais aussi les codes d'adresses de la mémoire principale, sont relativement complexes à réaliser. De plus, pour obtenir un taux d'utilisation élevé, leur taille doit être grande et peut atteindre, dans les systèmes informatiques actuels, une capacité de 16.000 octets, ce qui correspond à une puce comportant plus d'un million de transistors. Une telle puce est d'un prix de revient élevé, consomme de l'énergie pour fonctionner en permanence et présente un temps d'accès qui augmente en fonction de sa capacité mémoire.

Pour des exemples de l'état de la technique correspondant au préambule de la revendication 1, on peut faire référence aux documents suivants :
- US-A-4435,
- EP-A-0 082 903,
- Patent abstracts of Japan, Vol. 012, no. 492 (P-804, 22 décembre 1988 & JP-A-63 201 1828, et
- Patent Abstracts of Japan, Vol. 008, no. 089 (P-270), 24 avril 1984 & JP-A-59 00 5355.

Un but de la présente invention est donc de réaliser un système informatique comprenant un microprocesseur associé à une mémoire principale de grande capacité dans lequel le nombre des accès à cette mémoire principale est réduit de sorte qu'il en résulte une augmentation de la rapidité du système informatique et une diminution de sa consommation d'énergie.

L'invention concerne un système informatique comprenant un microprocesseur associé à une mémoire, tel que défini dans la revendication 1.

L'invention concerne également un procédé pour mettre en oeuvre un système informatique comprenant un microprocesseur associé à une mémoire, caractérisé en ce qu'il comprend les opérations suivantes :
- détermination de la fréquence d'utilisation par le microprocesseur des programmes d'instructions ou de données,
- enregistrement dans un premier module de mémoire à temps d'accès court des programmes d'instructions ou de données dont la fréquence d'utilisation est supérieure à un certain seuil S₁,
- enregistrement dans au moins un autre module de mémoire à temps d'accès long des programmes d'instructions ou de données dont la fréquence d'utilisation est inférieure audit seuil S₁,
- affectation à chaque adresse de lecture des modules de mémoire d'un code identifiant le module de mémoire qui doit être lu à l'adresse indiquée,
- transmission par le microprocesseur à chaque module de mémoire de l'adresse de lecture et du code identifiant le module de mémoire à lire, et
- transmission au microprocesseur de l'instruction ou donnée lue dans le module de mémoire identifié par le code.

D'autres buts et caractéristiques de la présente invention apparaîtront à la lecture de la description suivante d'exemples particuliers de réalisation, ladite description étant faite avec les dessins joints dans lesquels :
- la figure 1 est un schéma fonctionnel d'un système informatique selon l'invention dans le cas d'une mémoire contenant des instructions de programme ;
- la figure 2 est un diagramme des instructions de programme qui sont, par exemple, enregistrées dans un module de mémoire selon l'invention ;
- les figures 3A et 3B sont des variantes du schéma du système informatique de la figure 1 pour l'accès à un module de mémoire selon l'invention dans le cas d'un branchement inconditionnel ;
- la figure 4 est un schéma fonctionnel, analogue à celui de la figure 1, d'un système informatique selon l'invention dans le cas où les différents modules de mémoire ont des temps d'accès différents, et
- la figure 5 est un schéma fonctionnel, analogue à celui de la figure 1, d'un système informatique selon l'invention dans lequel il est prévu une lecture en parallèle de plusieurs instructions.

L'invention sera décrite dans son application à la lecture par un microprocesseur d'une mémoire contenant des instructions de programme du type à lecture seule, plus connue sous l'acronyme anglo-saxon ROM (pour Read Only Memory) mais elle s'applique également à la lecture par un microprocesseur d'une mémoire contenant des données qui est, en général, du type dit à accès aléatoire, plus connue sous l'acronyme anglo-saxon RAM (pour Random Access Memory).

Le système informatique 10 selon l'invention comprend un microprocesseur 11 qui a accès à une mémoire d'instructions 14 du type ROM par l'intermédiaire d'un circuit d'entrée 15. Les instructions lues dans la mémoire 14 sont transmises au microprocesseur 11 par l'intermédiaire d'un circuit de sortie 16.

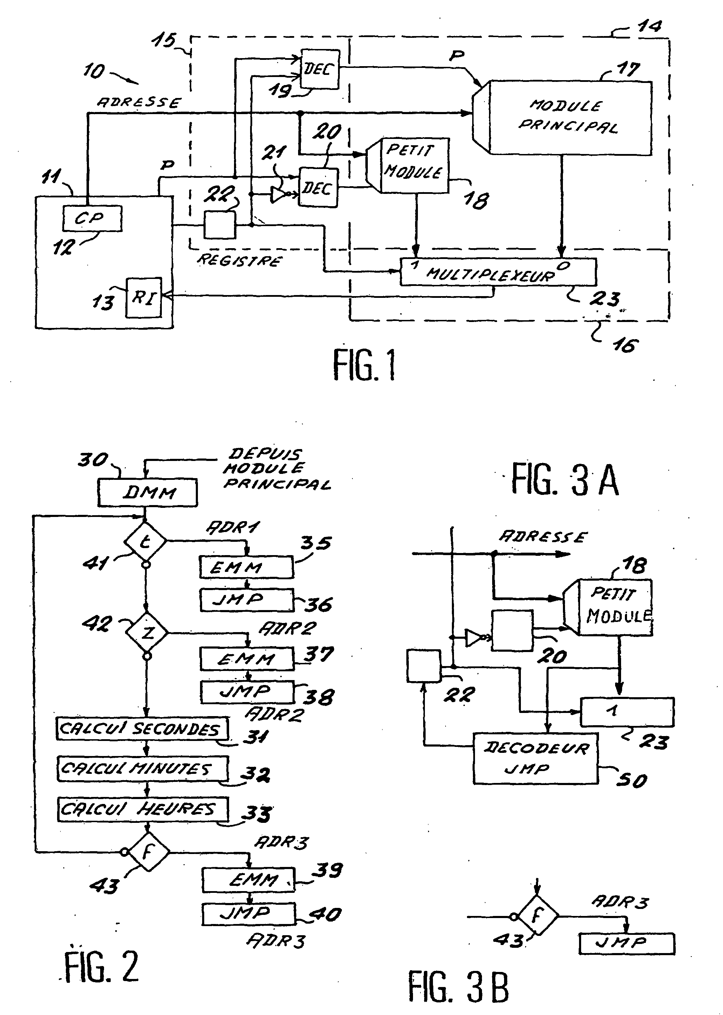

Le microprocesseur 11 comprend, sous une forme très schématique, un compteur de programme 12 (CP) et un registre d'instructions 13 (RI). La mémoire 14 comprend, selon l'invention, au moins deux modules de mémoire 17 et 18 dont les capacités sont très différentes : un premier module 18 de faible capacité ou petit module dans lequel sont enregistrées les instructions des programmes le plus souvent utilisés et un deuxième module 17 ou module principal dans lequel sont enregistrées les instructions des autres programmes qui sont, en fait, le moins souvent utilisés. Le circuit d'entrée 15 comprend un registre 22 pour enregistrer un code à un chiffre qui indique l'identité du module 17 ou 18 qui sera lu et qui est fourni par le microprocesseur 11. La borne de sortie de ce registre 22 est connectée à une des deux bornes d'entrée de deux circuits de décodage 19 et 20 (DEC), l'autre borne d'entrée étant connectée à une borne de sortie du microprocesseur, celle fournissant un signal dit de précharge P des modules de mémoire. La connexion du registre 22 au circuit de décodage 19 est directe tandis que celle au circuit de décodage 20 est par l'intermédiaire d'un circuit inverseur 21. Ces circuits 19, 20, 21 et le registre 22 réalisent la "précharge" des modules de mémoire 17 et 18 afin de préparer la lecture des cellules de mémoire identifiées par un code d'adresse fourni par le compteur de programme 12 du microprocesseur 11. Selon la valeur du chiffre O ou 1 contenu dans le registre 22, seul l'un des modules de mémoire 17 ou 18 sera lu. Ainsi, selon les conventions de la figure 1, lorsque le chiffre est 0, le module de mémoire 17 est lu tandis que lorsque le chiffre est 1, seul le module de mémoire 18 est lu.

Le circuit de sortie 16 des modules de mémoire 17 et 18 comprend principalement un circuit multiplexeur 23 qui est commandé par le chiffre affiché dans le registre 22 selon les mêmes conventions que l'accès au module de mémoire. Le circuit multiplexeur 23 a ses bornes de sortie qui sont connectées aux bornes d'entrée du registre d'instructions 13.

Pour que le système informatique qui vient d'être décrit en relation avec la figure 1 fonctionne, il faut prévoir des indications dans les instructions elles-mêmes, indications qui doivent être mises en place par le programmeur. Ainsi, dans le cas de deux modules de mémoire 17 et 18 du système de la figure 1, le programmeur introduit un couple d'instructions spéciales, l'une EMM pour l'activation du module de mémoire 17, dit principal, et l'autre DMM pour la désactivation du module de mémoire 17. Ainsi, selon les conventions mentionnées ci-dessus, EMM correspondra au chiffre O et DMM correspondra au chiffre 1. Ces instructions spéciales sont élaborées par le microprocesseur 11, le registre 22 étant alors considéré par ce dernier comme un registre périphérique.

Pour déterminer le contenu du module de mémoire 18, le programmeur doit sélectionner les programmes qui sont le plus souvent utilisés, ce qui permet de déterminer les parties des codes d'adresses correspondant à la série d'instructions de ces programmes. Ce sont ces parties des codes d'adresses qui serviront à sélectionner les cellules du module de mémoire 18 pour l'enregistrement des instructions des programmes très utilisés et pour leur lecture ensuite lors de l'exécution des programmes. Pour cette sélection des programmes les plus utilisés, il est recommandé d'utiliser un simulateur de programmes.

A titre d'exemple, dans un système informatique pour une montre électronique, le programme de calcul de l'heure est utilisé chaque seconde alors que le programme de gestion du calendrier l'est une fois par jour, celui de la gestion des mois l'est une fois par mois et celui de la gestion des années l'est une fois par année. De même, le programme de gestion de la couronne et des modes n'est activé que quelques fois par jour au maximum.

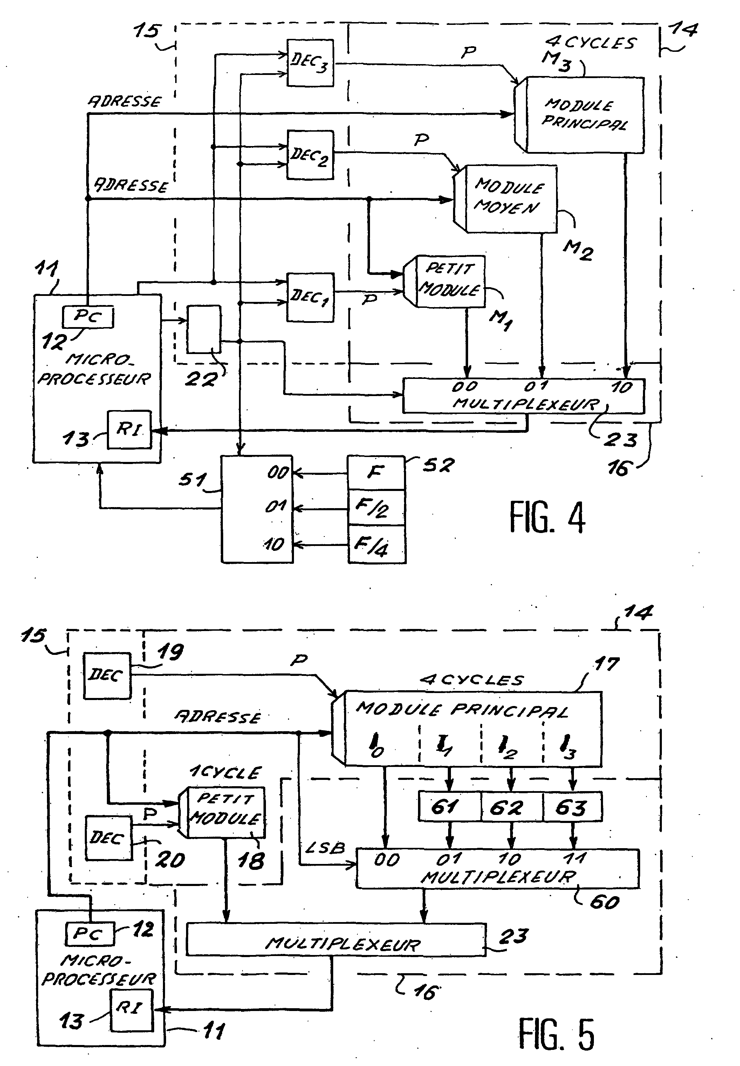

La figure 2 est un diagramme des instructions des différents programmes qui sont enregistrées dans le module de mémoire 18 pour une montre électronique en mettant en oeuvre le système selon l'invention et selon les critères définis dans le précédent paragraphe.

Sur ce diagramme, les rectangles 30 à 33 et 35 à 40 indiquent soit une instruction spéciale telle que EMM ou DMM ou une série d'instructions pour le calcul des secondes, celui des minutes et celui des heures. Quant aux losanges 41, 42 et 43 contenant respectivement les lettres t, z et f, ils indiquent des branchements inconditionnels vers le module de mémoire 17 pour l'exécution des programmes les moins utilisés tels que le calcul des mois et années (branchement f), la gestion des modes (branchement t) ou celle du réveil (branchement z). Pour effectuer ces branchements, le répertoire des instructions comporte des codes opératoires qui sont différents selon les branchements et qui indiquent le module de mémoire dans lequel se trouve la suite des instructions ainsi que l'adresse ADR1, ADR2 ou ADR3 dans le module.

En outre, chaque instruction peut comporter un chiffre supplémentaire, dans le cas de deux modules de mémoire, pour indiquer dans quel module de mémoire se trouve la prochaine instruction.

Sur la figure 3A, le code opératoire du branchement ou saut JMP est décodé par un circuit décodeur 50 dont le signal de sortie remet à zéro le registre 22, ce qui indique que la prochaine adresse est à rechercher dans le module principal et active ce dernier ; l'instruction EMM de la figure 2 n'est donc plus nécessaire et on passe directement à l'adresse ADR1, ADR2 ou ADR3 (figure 3B).

Le système informatique selon l'invention qui a été décrit en relation avec les figures 1, 2 et 3 ne comporte que deux modules de mémoire 17 et 18 mais il est clair que l'invention s'applique de manière générale à N modules de mémoire M₁, M₂, ...,M_{N} dont les capacités sont croissantes tandis que leurs temps d'accès sont croissants. Il faut alors prévoir N instructions EMM , EN₁ à EN_{N} et N instructions DMM, DM₁ à DM_{N}. Il en est de même des codes opératoires pour les branchements inconditionnels qui doivent spécifier l'identité du module de mémoire dans lequel se trouve la suite des instructions, c'est-à-dire N codes opératoires différents. Enfin, pour indiquer dans chaque instruction l'identité du module de mémoire dans lequel se trouve la prochaine instruction, celle-ci doit comporter n chiffres supplémentaires tels que 2ⁿ ≥ N.

Comme cela a été mentionné ci-dessus, les mémoires ont un temps d'accès d'autant plus long que leur capacité est grande. Par ailleurs, les mémoires de grande capacité avec temps d'accès long ont un prix de revient relativement faible de sorte qu'il est avantageux de les utiliser pour les instructions ou données dont les accès ne sont pas fréquents. Par contre, pour les instructions ou données dont les accès sont fréquents, il est préférable de les enregistrer dans des mémoires à temps d'accès court qui peuvent être obtenues avec des mémoires de petite capacité dont le prix de revient reste relativement faible.

Aussi, selon l'invention, il est proposé d'utiliser des modules de mémoires qui ont des temps d'accès et des capacités systématiquement différents. C'est ainsi que la figure 4 est un schéma d'un système informatique, selon une variante de l'invention, dont la mémoire 14 est scindée en N = 3 modules de mémoire M₁, M₂ et M₃ ayant des temps d'accès qui sont respectivement d'un cycle, de deux cycles et de quatre cycles. Dans cette variante, le registre 22 a deux chiffres et les codes qu'il enregistre en tant qu'élément périphérique du microprocesseur 11 sont décodés par les circuits de décodage DEC₁, DEC₂, et DEC₃ de manière à ne sélectionner à l'adressage que l'un des modules de mémoire M₁, M₂ ou M₃ et à commander le circuit multiplexeur 23 du circuit de sortie 16 pour l'aiguillage des informations (instructions ou données) vers le microprocesseur 11.

Pour obtenir des temps d'accès différents, il est prévu de modifier la fréquence des signaux d'horloge qui sont appliqués au microprocesseur 11. ceci est obtenu à l'aide d'un circuit multiplexeur 51 qui est commandé par les codes contenus dans le registre 22 de manière à aiguiller les signaux de fréquences différentes F, F/2 et F/4 fournis par un circuit horloge 52 vers le microprocesseur 11 selon la valeur des codes 00 pour la fréquence F et le module de mémoire M₁, 01 pour la fréquence F/2 et le module de mémoire M₂ et 10 pour la fréquence F et le module de mémoire M₃.

A titre d'illustration, si le module de mémoire M₁ contient les programmes qui sont utilisés 60 % du temps, le module de mémoire M₂ contient les programmes qui sont utilisés 30 % du temps et le module de mémoire M₃ contient les programmes qui sont utilisés 10 % du temps, le temps de cycle moyen est de 1,6 cycle par instruction. Il en résulte que lors des 6 cycles sur 16, le microprocesseur devrait exécuter un cycle à vide avec le module de mémoire M₂ et trois cycles à vide avec le module de mémoire M₃, ce qui réduit l'efficacité du microprocesseur 11.

Pour améliorer cette efficacité du microprocesseur 11 qui peut exécuter une instruction par cycle à la fréquence F, l'invention propose de lire les modules de mémoire M₁, M₂ et M₃ en parallèle, c'est-à-dire de lire, par cycle de fréquence F, une instruction dans le module de mémoire M₁, deux instructions dans le module de mémoire M₂ et quatre instructions dans le module de mémoire M₃. Dans ce cas, les instructions en parallèle, pour autant qu'elles ne comportent pas de branchement, peuvent être transmises au microprocesseur l'une après l'autre à la fréquence F avec l'exécution d'une instruction par cycle.

Le schéma fonctionnel de la figure 5 est analogue à celui de la figure 1 en ce sens que la mémoire 14 est scindée en deux modules de mémoire 17 et 18 mais il en diffère par le fait que le circuit d'entrée 15 et le circuit de sortie 16 sont prévus pour lire en parallèle par cycle de fréquence F, une instruction dans le module de mémoire 18 et quatre instructions dans le module de mémoire 17 et pour aiguiller ces instructions vers le microprocesseur 11. En outre, le module de mémoire 17 a un temps d'accès de quatre cycles de fréquence F.

A cet effet, le circuit de sortie 16 comprend, non seulement le circuit multiplexeur 23, mais un circuit multiplexeur complémentaire 60 à la sortie du module de mémoire 17 qui est commandé par le décodage des deux chiffres les moins significatifs (LSB) du code d'adresse. Entre le module de mémoire 17 et le circuit multiplexeur 60, il est prévu trois mémoires-tampons 61, 62 et 63 pour enregistrer les trois des quatre instructions I₀, I₁, I₂ et I₃ qui sont lues en parallèle, celles qui ne sont pas exécutées immédiatement, à savoir I₁, I₂ et I₃, la première I₀ étant transmise immédiatement au circuit multiplexeur 60.

Le fonctionnement du système informatique de la figure 5 est alors le suivant. Lorsque le module de mémoire 18 fournit une instruction qui commande la lecture d'instructions dans le module de mémoire 17 dont le temps d'accès est quatre fois plus long que celui du module de mémoire 18, le microprocesseur 11 doit exécuter trois cycles à vide (NOP) avant de pouvoir charger dans le registre 13 une des quatre instructions, en principe, l'instruction I₀. Les trois autres instructions I₁, I₂ et I₃ sont stockées respectivement dans les mémoires-tampons 61, 62 et 63 et l'invention prévoit de précharger le module de mémoire 17 en vue d'une lecture en un seul cycle lorsque les instructions I₁, I₂ et I₃ auront été transmises l'une après l'autre à chaque cycle du microprocesseur par le circuit multiplexeur 60 sous la commande du signal du code LSB. Ainsi, lors de l'exécution de l'instruction I₃, le module de mémoire 17 est lu à l'adresse indiquée et quatre nouvelles instructions sont disponibles pour le cycle suivant de sorte que la nouvelle première instruction I₀ est transmise au microprocesseur 11. Il n'y a donc pas trois cycles à vide pour le deuxième ensemble de quatre instructions et les suivants.

Dans le cas d'une instruction de branchement, une partie des instructions lues ne sont pas utiles et il est alors nécessaire d'insérer des cycles à vide ou de recourir à d'autres solutions qui ne sont pas décrites ici.

Afin d'éviter les trois cycles à vide pour la première lecture du module de mémoire 17, l'invention propose d'anticiper cette lecture en utilisant non pas la dernière instruction lue dans le module de mémoire 18 mais une des instructions qui la précède. De cette manière, lorsque la dernière instruction dans le module de mémoire 18 sera exécutée, les quatre instructions lues simultanément dans le module de mémoire 17 seront disponibles et le microprocesseur pourra exécuter la première instruction I₀ sans insérer de cycle à vide.

La mise en oeuvre de cette lecture par anticipation est facile si la séquence d'instructions dans les deux modules de mémoire 17 et 18 comporte des adresses continues, c'est-à-dire sans branchement. Par exemple, lorsque l'instruction à l'adresse X est en cours de lecture dans le module de mémoire 18, une lecture dans le module de mémoire 17 est effectuée à l'adresse (X + 3).

Dans le cas d'un branchement, l'adresse de lecture dans le module de mémoire 17 n'est pas connu au moment de l'anticipation et il faut ajouter cette information à l'instruction qui commande l'activation du module de mémoire 17 ou lire cette information dans une table.

Comme on l'a indiqué ci-dessus, l'invention est applicable aux mémoires de données, mais elle est aussi applicable aux mémoires-caches qui ont été mentionnées dans le préambule de la présente description.

Dans le cas d'une application à une mémoire-cache qui serait divisée en deux modules, le module de grande capacité serait une mémoire-cache classique avec comparaison associative d'adresse tandis que le module de faible capacité serait réalisé selon l'invention pour enregistrer les instructions des programmes le plus souvent utilisés, ces instructions ne pouvant pas être enregistrées dans le module de grande capacité. A cet effet, le programmeur doit enregistrer dans le module de faible capacité toutes les instructions d'un programme correspondant à une certaine partie du code d'adresse de sorte que si une instruction comporte cette partie de code, seule la mémoire de faible capacité est lue sans comparaison associative d'adresse. Bien entendu, si le module de faible capacité est une mémoire du type RAM, il peut être rechargé par une autre partie de code pour l'exécution d'un autre programme, ce qui nécessite une procédure de chargement sous contrôle du logiciel.

Pour mettre en oeuvre le système informatique selon l'invention, les opérations suivantes sont à réaliser :
- détermination de la fréquence d'utilisation par le microprocesseur 11 des programmes d'instructions ou de données,
- enregistrement dans un premier module de mémoire 18, M1 à temps d'accès court des programmes d'instructions ou de données dont la fréquence d'utilisation est supérieure à un certain seuil S₁,
- enregistrement dans au moins un autre module de mémoire 17, M₂, M₃ à temps d'accès long des programmes d'instructions ou de données dont la fréquence d'utilisation est inférieure audit seuil S₁,
- affectation à chaque adresse de lecture des modules de mémoire 17, 18, M₁, M₂, M₃ d'un code identifiant le module de mémoire qui doit être lu à l'adresse indiquée,
- transmission par le microprocesseur 11 à chaque module de mémoire 17, 18, M₁, M₂, M₃ de l'adresse de lecture et du code identifiant le module de mémoire à lire et
- transmission au microprocesseur 11 de l'instruction ou donnée lue dans le module de mémoire identifié par le code.

## Revendications

1. Un système informatique (10) comprenant un microprocesseur (11) associé à une mémoire (14), **caractérisé en ce que** ladite mémoire (14) est scindée en N modules avec N égal ou supérieur à 2 de capacité croissante, le temps d'accès à chaque module de mémoire (17, 18, M₁, M₂, M₃) étant une fonction croissante de sa capacité, le module de plus petite capacité (18, M₁) étant réservé aux instructions ou données des programmes qui sont le plus souvent utilisés au cours du fonctionnement du système informatique et le module de plus grande capacité (17, M₂, M₃) étant réservé aux instructions ou données des programmes qui sont le moins souvent utilisés au cours du fonctionnement du système informatique et **en ce que** chaque instruction d'accès à la mémoire à N modules de mémoire comprend un code déterminant l'identité de l'un des N modules de mémoire dans lequel l'instruction ou la donnée du programme est à lire, **caractérisé en ce que** :
- les modules de mémoire (17, 18, M₁, M₂, M₃) sont lus de manière à lire une instruction ou donnée dans le module de mémoire de plus faible capacité (18, M₁) et plusieurs instructions ou données en parallèle dans chacun des autres modules de mémoire (17, M₂, M₃) ;
- le circuit de sortie (16) comprend, en outre, pour chaque module de mémoire autre que celui de plus faible capacité, au moins une mémoire-tampon (61, 62, 63) pour enregistrer les instructions ou données lues en parallèle dans ledit module et un circuit multiplexeur (60) pour aiguiller les instructions ou données contenues dans chaque mémoire-tampon (61, 62, 63) vers le microprocesseur (11), et
- **en ce que** le circuit multiplexeur (60) associé à chaque module de mémoire autre que celui de plus faible capacité est commandé par les signaux représentatifs d'un code correspondant aux chiffres les moins significatifs (LSB) de l'adresse du module de mémoire concerné.

2. Système informatique selon la revendication 1, **caractérisé en ce que** le code déterminant l'identité du module de mémoire à lire est enregistré dans un registre (22) à n chiffres tels que 2ⁿ ≥ N qui est chargé par le microprocesseur 11.

3. Système informatique selon la revendication 2, **caractérisé en ce que** les N modules de mémoire (17, 18, M₁, M₂, M₃) ont un circuit d'entrée (15) et un circuit de sortie (16) qui sont commandés par les signaux représentatifs du code contenu dans ledit registre (22) de manière à lire le module de mémoire (17, 18, M₁, M₂, M₃) déterminé par ledit code à l'adresse indiquée par le microprocesseur (11) et à transmettre l'information lue vers le microprocesseur (11).

4. Système informatique selon la revendication 3, **caractérisé en ce que** le circuit d'entrée (15) comprend des circuits de décodage (19, 20, 21, DEC₁, DEC₂, DEC₃) pour décoder le code enregistré dans le registre (22) et pour sélectionner le module de mémoire (17, 18, M₁, M₂, M₃) déterminé par ledit code.

5. Système informatique selon la revendication 3 ou 4, **caractérisé en ce que** le circuit de sortie (16) comprend au moins un circuit multiplexeur (23) qui est connecté aux bornes de sortie de lecture des modules de mémoire (17, 18, M₁, M₂ et M₃) dont l'aiguillage est commandé par les signaux représentatifs du code contenu dans ledit registre (22).

6. Système informatique selon l'une quelconque des revendications précédentes 1 à 5, **caractérisé en ce que** le module de mémoire de plus faible capacité (M₁) a un cycle de lecture égal au cycle élémentaire du microprocesseur (11) tandis que les autres modules de mémoire (M₂, M₃) ont des cycles de lecture qui sont égaux respectivement à deux et quatre cycles élémentaires du microprocesseur (11).

7. Système électronique selon la revendication 6, **caractérisé en ce que** le cycle élémentaire du microprocesseur (11) varie en fonction du code contenu dans le registre (22) de manière à lire le module de mémoire de plus faible capacité (M₁) à la fréquence F et les autres modules de mémoire (M₂, M₃) respectivement aux fréquences F/2 et F/4.

8. Système informatique selon la revendication 7, **caractérisé en ce que** les signaux aux fréquences F, F/2 et F/4 sont fournis par un circuit horloge (52), lesdits signaux étant aiguillés vers le microprocesseur (11) par l'intermédiaire d'un circuit multiplexeur (51) qui est commandé par les signaux représentatifs du code contenu dans le registre (22).

9. Procédé pour mettre en oeuvre le système informatique selon l'une des revendications précédentes 1 à 8, **caractérisé en ce qu'**il comprend les opérations suivantes :
- détermination de la fréquence d'utilisation par le microprocesseur (11) des programmes d'instructions ou de données,
- enregistrement dans un premier module de mémoire à temps d'accès court (18, M₁) des programmes d'instructions ou de données dont la fréquence d'utilisation est supérieure à un certain seuil S₁,
- enregistrement dans au moins un autre module de mémoire (18, M₂, M₃) à temps d'accès long des programmes d'instructions ou de données dont la fréquence d'utilisation est inférieure audit seuil S₁,
- affectation à chaque adresse de lecture des modules de mémoire (17, 18, M₁, M₂, M₃) d'un code identifiant le module de mémoire qui doit être lu à l'adresse indiquée,
- transmission par le microprocesseur (11) à chaque module de mémoire (17, 18, M₁, M₂, M₃) de l'adresse de lecture et du code identifiant le module de mémoire à lire, et
- transmission au microprocesseur (11) de l'instruction ou donnée lue dans le module de mémoire identifié par le code.

## Claims

1. A computer system (10) comprising a microprocessor (11) associated with a memory (14), **characterised by** the fact that the said memory (14) is divided into N modules with N equal to or greater than 2 of increasing capacity, the access time of each memory module (17, 18, M₁, M₂, M₃) being an increasing function of its capacity, the module of smaller capacity (18, M₁) being reserved for the instructions or data of the programs which are most frequently used during the operation of the computer system and the module of larger capacity (17, M₂, M₃) being reserved for the instructions or data of the programs which are least frequently used during the operation of the computer system, and by the fact that each access instruction to the memory with N memory modules comprises a code determining the identity of one of the N memory modules in which the instruction or the data bit of the program is to be read, **characterised by** the fact that:
- the memory modules (17, 18, M₁, M₂, M₃) are read so as to read an instruction or data bit in the memory module of smaller capacity (18, M₁) and a plurality of instructions or data in parallel in each of the other memory modules (17, M₂, M₃);
- the output circuit (16), in addition, comprises, for each memory module other than that of smaller capacity, at least one memory buffer (61, 62, 63) for storing the instructions or data read in parallel in the said module and a multiplexing circuit (60) for switching the instructions or data contained in each memory buffer (61, 62, 63) to the microprocessor (11), and
- by the fact that the multiplexing circuit (60) associated with each memory module other than that of smaller capacity is controlled by the signals representing a code corresponding to the least significant bits (LSB) of the address of the memory module in question.

2. Computer system as described in claim 1, **characterised by** the fact that the code determining the identity of the memory module to be read is stored in an n-bit register (22) such that 2ⁿ ≥ N which is loaded by the microprocessor (11).

3. Computer system as described in claim 2, **characterised by** the fact that the N memory modules (17, 18, M₁, M₂, M₃) have an input circuit (15) and an output circuit (16) which are controlled by the signals representing the code contained in the said register (22) so as to read the memory module (17, 18, M₁, M₂, M₃) determined by the said code at the address indicated by the microprocessor (11) and to transmit the information read to the microprocessor (11).

4. Computer system as described in claim 3, **characterised by** the fact that the input circuit (15) comprises decoding circuits (19, 20, 21, DEC₁, DEC₂, DEC₃) for decoding the code stored in the register (22) and for selecting the memory module (17, 18, M₁, M₂, M₃) determined by the said code.

5. Computer system as described in claim 3 or 4, **characterised by** the fact that the output circuit (16) comprises at least one multiplexing circuit (23) which is connected to the read output terminals of the memory modules (17, 18, M₁, M₂ and M₃) the switching of which is controlled by the signals representing the code contained in the said register (22).

6. Computer system as described in any one of the preceding claims 1 to 5, **characterised by** the fact that the memory module of smaller capacity (M₁) has a read cycle equal to the basic cycle of the microprocessor (11) while the other memory modules (M₂, M₃) have read cycles which are equal to two and four basic cycles of the microprocessor (11) respectively.

7. Electronic system as described in claim 6, **characterised by** the fact that the basic cycle of the microprocessor (11) varies as a function of the code contained in the register (22) so as to read the memory module of smaller capacity (M₁) at the frequency F and the other memory modules (M₂, M₃) respectively at the frequencies F/2 and F/4.

8. Computer system as described in claim 7, **characterised by** the fact that the signals at the frequencies F, F/2 and F/4 are provided by a clock circuit (52), the said signals being switched to the microprocessor (11) by means of a multiplexing circuit (51) which is controlled by the signals representing the code contained in the register (22).

9. Process for implementing the computer system as described in one of the preceding claims 1 to 8, **characterised by** the fact that it comprises the following operations:
- determination of the frequency of use by the microprocessor (11) of the programs of instructions or data,
- storage in a first memory module with a short access time (18, M₁) of the programs of instructions or data the use frequency of which is greater than a certain threshold S₁,
- storage in at least one other memory module (18, M₂, M₃) with a long access time of programs of instructions or data of which the use frequency is less than the said threshold S₁,
- allocation to each read address of the memory modules (17, 18, M₁, M₂, M₃) of a code identifying the memory module which must be read at the address indicated,
- transmission by the microprocessor (11) to each memory module (17, 18, M₁, M₂, M₃) of the read address and of the code identifying the memory module to be read, and
- transmission to the microprocessor (11) of the instruction or data bit read in the memory module identified by the code.

## Patentansprüche

1. Rechnersystem (10) mit einem Mikroprozessor (11), der einem Speicher (14) zugeordnet ist, **dadurch gekennzeichnet, daß** der Speicher (14) in N Module mit zunehmender Kapazität aufgeteilt ist, wobei N gleich oder größer als 2 ist, wobei die Zugriffszeit auf jedes Speichermodul (17, 18, M₁, M₂, M₃) eine mit seiner Kapazität zunehmende Funktion ist, wobei das Modul mit der kleinsten Kapazität (18, M₁) für Befehle oder Daten von Programmen reserviert ist, welche im Laufe der Arbeit des Rechnersystems am häufigsten verwendet werden, und das Modul mit der größten Kapazität (17, M₂, M₃) für Befehle oder Daten vom Programmen reserviert ist, die im Laufe der Arbeit des Rechnersystems weniger oft verwendet werden, und daß jeder Befehl zum Zugreifen auf den Speicher mit den N Speichermodulen einen Code umfaßt, welcher die Identität eines der N Speichermodule bestimmt, in welchem der Befehl oder die Daten des Programms gelesen werden sollen, **dadurch gekennzeichnet, daß**
die Speichermodule (17, 18, M₁, M₂, M₃) derart gelesen werden, daß ein Befehl oder Daten in dem Speichermodul mit der geringsten Kapazität (18, M₁) und mehrere Befehle oder Daten parallel in jedem der weiteren Speichermodule (17, M₂, M₃) gelesen werden;
der Ausgangsschaltkreis (16) für jedes Speichermodul, außer das mit der geringsten Kapazität, wenigstens einen Speicherpuffer (61, 62, 63) zum Aufzeichnen der parallel gelesenen Befehle oder Daten in diesem Modul und einen Multiplexer-Schaltkreis (60) zum Lenken der Befehle oder Daten, die in jedem Speicherpuffer (61, 62, 63) enthalten sind, in Richtung des Mikroprozessors (11) aufweist, und
daß der Multiplexer-Schaltkreis (60), der jedem Speichermodul außer dem mit der geringsten Kapazität zugeordnet ist, durch die Signale gesteuert wird, welche einen Code darstellen, der den niedrigstwertigen Stellen (LSB) der Adresse des betroffenen Speichermoduls entspricht.

2. Rechnersystem nach Anspruch 1, **dadurch gekennzeichnet, daß** der Code, welcher die Identität des zu lesenden Speichermoduls bestimmt, in einem Register (22) mit n Stellen aufgezeichnet ist, wobei 2ⁿ ≥ N, das durch den Mikroprozessor (11) geladen wird.

3. Rechnersystem nach Anspruch 2, **dadurch gekennzeichnet, daß** die N Speichermodule (17, 18, M₁, M₂, M₃) einen Eingangsschaltkreis (15) und einen Ausgangsschaltkreis (16) aufweisen, die durch die Signale gesteuert werden, welche den in dem Register (22) enthaltenen Code entsprechen, um das Speichermodul (17, 18, M₁, M₂, M₃) zu lesen, das durch diesen Code bei der durch den Mikroprozessor (11) angegebenen Adresse bestimmt wird, und um die gelesene Information in Richtung des Mikroprozessors (11) zu übertragen.

4. Rechnersystem nach Anspruch 3, **dadurch gekennzeichnet, daß** der Eingangsschaltkreis (15) Dekodierschaltkreise (19, 20, 21, DEC₁, DEC₂, DEC₃) zum Dekodieren des in dem Register (22) aufgezeichneten Codes und zum Auswählen des Speichermoduls (17, 18, M₁, M₂, M₃), das durch diesen Code bestimmt wird, aufweist.

5. Rechnersystem nach Anspruch 3 oder 4, **dadurch gekennzeichnet, daß** der Ausgangsschaltkreis (16) wenigstens einen Multiplexer-Schaltkreis (23) aufweist, der mit Leseausgangsanschlüssen der Speichermodule (17, 18, M₁, M₂, M₃) verbunden ist, dessen Lenkung durch die Signale gesteuert wird, welche dem in diesem Register (22) enthaltenen Code entsprechen.

6. Rechnersystem nach einem der vorangehenden Ansprüche 1 bis 5, **dadurch gekennzeichnet, daß** das Speichermodul mit der geringsten Kapazität (M₁) einen Lesezyklus aufweist, der gleich dem elementaren Zyklus des Mikroprozessors (11) ist, während die anderen Speichermodule (M₂, M₃) Lesezyklen aufweisen, die zwei und vier elementaren Zyklen des Mikroprozessors (11) entsprechen.

7. Elektronisches System nach Anspruch 6, **dadurch gekennzeichnet, daß** der elementare Zyklus des Mikroprozessors (11) als eine Funktion des in dem Register (22) enthaltenen Codes variiert, um das Speichermodul mit der geringsten Kapazität (M₁) mit der Frequenz F zu lesen und die anderen Speichermodule (M₂, M₃) mit Frequenzen F/2 bzw. F/4 zu lesen.

8. Rechnersystem nach Anspruch 7, **dadurch gekennzeichnet, daß** die Signale mit den Frequenzen F, F/2 und F/4 über einen Taktschaltkreis (52) geliefert werden, wobei diese Signale über einen Multiplexer-Schaltkreis (51), der durch die Signale gesteuert wird, die dem in dem Register (22) enthaltenen Code entsprechen, in Richtung des Mikroprozessors (11) gelenkt werden.

9. Verfahren zum Betreiben des Rechnersystems nach einem der vorangehenden Ansprüche 1 bis 8, **gekennzeichnet durch** die folgenden Verfahrensschritte:
Bestimmen der Arbeitsfrequenz für Befehls- oder Datenprogramme **durch** den Mikroprozessor (11),
Aufzeichnen von Befehls- oder Datenprogrammen, deren Arbeitsfrequenz über einem bestimmten Schwellwert S₁ liegt, in einem ersten Speichermodul mit einer kurzen Zugriffszeit (18, M₁),
Aufzeichnen von Befehls- oder Datenprogrammen, deren Arbeitsfrequenz unter dem Schwellwert S₁ liegt, in einem anderen Speichermodul (18, M₂, M₃) mit einer langen Zugriffszeit,
Anhängen eines Codes, welcher das Speichermodul identifiziert, das bei der angegebenen Adresse gelesen werden soll, an jede Leseadresse der Speichermodule (17, 18, M₁, M₂, M₃),
Übertragen der Leseadresse und des Codes, welcher das zu lesende Speichermodul identifiziert, an jedes Speichermodul (17, 18, M₁, M₂, M₃) **durch** den Mikroprozessor (11) und
Übertragen des in dem Speichermodul, das **durch** den Code identifiziert wird, gelesenen Befehls oder der Daten an den Mikroprozessor (11).
